# EUROPEAN PATENT SPECIFICATION

(11) **EP 2 200 531 B1**
(45) Date of publication and mention of the grant of the patent: **31.08.2016**
(21) Application number: 08839242.8
(22) Date of filing: 08.10.2008
(51) Int. Cl.: A61C 8/00

(54) **BUTTON FOR IMPLANT HEALING ABUTMENT AND IMPLANT HEALING ABUTMENT HAVING PRESSING PART**
KNOPF FÜR IMPLANTATPFEILER UND IMPLANTATPFEILER MIT DRUCKTEIL
BOUTON POUR BUTÉE DE CICATRISATION D'UN IMPLANT ET BUTÉE DE CICATRISATION D'UN IMPLANT QUI COMPREND UNE PARTIE DE PRESSION

(30) Priority: 19.10.2007 KR 20070105478; 30.05.2008 KR 20080051201; 14.08.2008 KR 20080079851
(43) Date of publication of application: 30.06.2010
(73) Proprietor: Yang, Ki Bin, Daegu 706-926 (KR)
(72) Inventor: Yang, Ki Bin, Daegu 706-926 (KR)
(74) Representative: Stolmár & Partner Patentanwälte PartG mbB
(86) International application number: PCT/KR2008/005898
(87) International publication number: WO 2009/051367

(56) References cited:
- EP-A1- 0 657 146
- WO-A2-01/85050
- US-A- 4 657 510
- US-A- 5 145 372
- US-A- 5 813 858
- US-A- 5 938 443
- US-B1- 6 171 106

## Description

### [Technical Field]

The present invention relates to a button for an implant healing abutment and an implant healing abutment having a pressing part, and more particularly, to a button for an implant healing abutment, which is coupled to the implant healing abutment to press and fix the gingiva incised for the connection of the implant healing abutment without the need of suturing the gingiva so that attached gingiva (AG) can be maximally secured, and an implant healing abutment having a pressing part.

### [Background Art]

Dental implant surgery, a commonly used dental surgery method, is designed to implant an artificial tooth in place of and to recover the function of a missing permanent tooth. In dental implant surgery, an implant fixture is anchored to an alveolar bone at the place where the permanent tooth is missing from, and the artificial tooth is secured in the implant fixture so that the artificial tooth can perform the function of the missing permanent tooth.

In dental implant surgery, it is necessary to create and maintain circumstances until the implant fixture is stably anchored to the alveolar bone. In other words, in order to ensure proper functioning of the artificial tooth, the artificial tooth is not immediately secured after the implant fixture is placed, and it is preferable to pass through an intermediate step.

In detail, the intermediate step is divided into two classes as described below.

First, two-stage surgery can be generally conducted. During primary dental surgery for placing an implant fixture, a cover screw is inserted into the empty space of the implant fixture, and gingiva is closed by being sutured. Then, when the implant fixture is stably anchored to an alveolar bone, secondary dental surgery is conducted. That is to say, the gingiva is incised again, and an implant healing abutment is joined to the implant fixture in place of the cover screw such that the implant healing abutment is exposed out of the upper end of the gingiva. Then, the gingiva is healed.

Second, one-stage surgery may be conducted. In the one-stage surgery, when placing an implant fixture, an implant healing abutment is immediately joined to the implant fixture such that the implant healing abutment is exposed out of the upper end of the gingiva. Then, the gingiva is healed. The one-stage surgery may be conducted when the alveolar bone of a patient is in a good condition or when it is required to conduct dental implant surgery within a short period.

Hence, when conducting the dental implant surgery, regardless of the type thereof, it is necessary to join an implant healing abutment to an implant fixture such that the implant healing abutment is exposed out of the upper end of gingiva, and to then heal the gingiva.

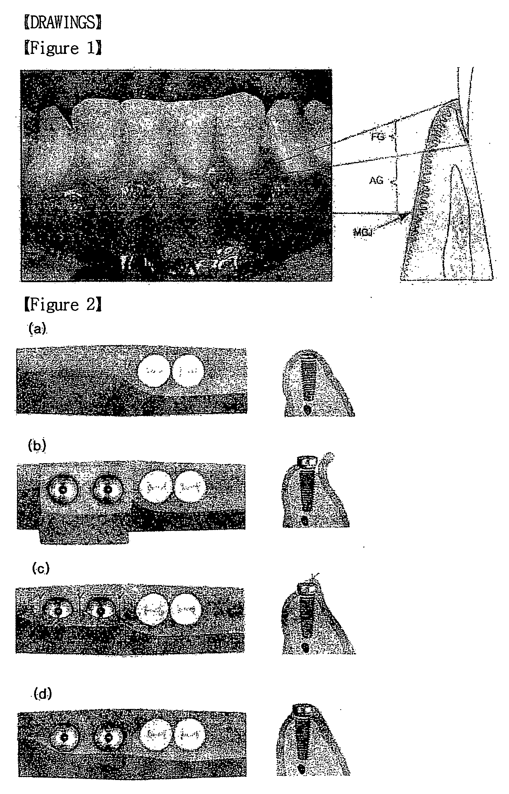

Referring to FIG. 1, when viewed from a mucogingival junction (MGJ), gingiva under a tooth is divided into attached gingiva (AG) and free gingiva (FG), which are close to the tooth, and alveolar mucosa, which is distant from the tooth. Since the attached gingiva has tissue which firmly adheres to the alveolar bone and is dense and less mobile, it resists well against an inflammation or gingival recession. Therefore, the stronger the attached gingiva is secured, the more the advantages can be provided for the health of the tooth.

Thus, in the course of conducting the dental implant surgery such that the gingiva is healed with the implant healing abutment joined to the implant fixture, when the attached gingiva is secured as much as possible, the success of the dental implant surgery can be ensured.

In the conventional art, in order to secure the attached gingiva as much as possible when conducting the dental implant surgery, surgery such as free gingival graft or partial thickness apically positioned flap was additionally conducted. However, recently, surgery that is simple and can minimize ill effects is preferred. In a typical example of this surgery, a horizontal incision is made at a lingual side and the attached gingiva is moved to a buccal side.

In this regard, referring to FIG. 2, in the State in which a tooth is missing and attached gingiva exists only at a lingual side (a), in order to place the attached gingiva at a buccal side when suturing gingiva after joining an implant healing abutment to an implant fixture, horizontal incision is made at the lingual side, and downward vertical incision is then made beyond a mucogingival junction (b). Next, suture is conducted such that the attached gingiva partially covers the implant healing abutment (c), whereby the attached gingiva at the lingual side is used to partially cover the implant healing abutment at the buccal side (d) so that the attached gingiva can be maximally utilized.

However, in this method, because suture is adopted, a lengthy period is required to complete the dental implant surgery. Also, because the attached gingiva is placed on the implant healing abutment due to the use of suture, the amount of the attached gingiva decreases to some extent, whereby limitations necessarily follow as pertains to sufficiently securing the attached gingiva.

US 6,171,106 discloses a button carrying a pressing part that is adapted to be coupled to an abutment to be fixed to the implant and is configured for holding and fixing a membrane on the bone during the healing period.

EP 0 657 146 discloses a pressing part that is adapted for holding and fixing either a membrane on the bone or a bone graft during the healing period.

WO 01 85050 discloses a flange fixed to the healing abutment that holds the gum tissue and controls the healing and growth of the gum tissue.

US 5 938 443 discloses an emergence profiler that projects sidewards from the button body to be fixed to the healing abutment. The emergence profiler presses on the gingiva but is not adapted for holding an incised gingival flap.

### [Disclosure]

### [Technical Problem]

Accordingly, the present invention has been made in an effort to solve the problems occurring in the related art due
to the use of a suturing method in order to secure attached gingiva, and an object of the present invention is to provide a button for an implant healing abutment which can secure an increased amount of attached gingiva and can improve the conveniences of a surgeon and a patient, and an implant healing abutment having a pressing part.

### [Technical Solution]

In order to achieve the above object, according to one aspect of the present invention, there is provided a button for an implant healing abutment, comprising a button body adapted to be coupled to an implant healing abutment; and a pressing part projecting sideward from the button body, wherein the pressing part is adapted to cover, fix and heal an incised gingival flap including attached gingiva.

In order to achieve the above object, according to another aspect of the present invention, there is provided an implant healing abutment having a pressing part, comprising an implant healing abutment adapted to be joined to an implant fixture; and a pressing part projecting sideward on the implant healing abutment, wherein the pressing part is adapted to cover, fix and heal an incised gingival flap including attached gingiva. Further preferred embodiments are depicted in the dependent claims.

### [Advantageous Effects]

Thanks to the above features, the button for an implant healing abutment and the implant healing abutment having a pressing part provide advantages in that the pressing part covers, fixes and heals an incised gingival flap including attached gingiva. Therefore, in the present invention, it is possible to solve the problems caused in the conventional art arising from the fact that attached gingiva is likely to be lost because it is positioned on an implant healing abutment attributable to the suture of an incised gingival flap. As a consequence, in the present invention, attached gingiva can be maximally secured.

Accordingly, in the present invention, long-term success of implant surgery becomes possible. Further, surgery and recovery time can be significantly shortened for the patient thanks to sutures not being used.

### [Description of Drawings]

FIG. 1 is a view showing the structure of gingiva observed at a mucogingival junction.
FIG. 2 is of views showing a procedure for placing an implant healing abutment through the surgery of conducting horizontal incision at a lingual side and moving attached gingiva to a buccal side.
FIG. 3 is a view illustrating a first embodiment of a button for an implant healing abutment according to the present invention.
FIG. 4 is a view illustrating a second embodiment of the button for an implant healing abutment according to the present invention.
FIG. 5 is a view illustrating a third embodiment of the button for an implant healing abutment according to the present invention.
FIG. 6 is a view illustrating a fourth embodiment of the button for an implant healing abutment according to the present invention.
FIG. 7 is a view illustrating a fifth embodiment of the button for an implant healing abutment according to the present invention.
FIG. 8 is a view illustrating a sixth embodiment of the button for an implant healing abutment according to the present invention.
FIG. 9 is a view illustrating a seventh embodiment of the button for an implant healing abutment according to the present invention.
FIG. 10 is a view illustrating an eighth embodiment of the button for an implant healing abutment according to the present invention.
FIG. 11 is a view illustrating the state in which the button for an implant healing abutment according to the present invention is installed.
FIG. 12 is a view illustrating a first embodiment of an implant healing abutment having a pressing part according to the present invention.
FIG. 13 is a view illustrating a second embodiment of the implant healing abutment having a pressing part according to the present invention.
FIG. 14 is a view illustrating a third embodiment of the implant healing abutment having a pressing part according to the present invention.
FIG. 15 is a view illustrating a fourth embodiment of the implant healing abutment having a pressing part according to the present invention.
FIG. 16 is a view illustrating the pressing part which constitutes the implant healing abutment of FIG. 15 and is observed from a different direction.
FIG. 17 is a view showing a procedure for setting an implant healing abutment by using the button for an implant healing abutment according to the present invention.

**<Description of Reference Numerals for Main Parts in Drawings>**

| | | | |
|---|---|---|---|
| BUTTON: | button for implant healing abutment | | |
| FIXTURE: | implant fixture | | |
| FLAP: | gingival flap | | |
| H.A.: | implant healing abutment | | |
| 10: | head of implant healing abutment | 11: | thread |
| 12: | depression | 100: | button body |
| 110: | fitting hole | 120: | inward flange |
| 130: | thread | 140: | prominence |
| 200: | pressing part | 300: | packing member |
| 400: | integral type implant healing abutment | | |
| 410: | pressing part | | |
| 500: | two piece-type implant healing abutment | | |
| 510: | implant healing abutment body | | |
| 520: | implant healing abutment cover | | |
| 521: | pressing part | | |
| 600: | three piece-type implant healing abutment | | |
| 610: | implant fixture coupling part | | |
| 611: | groove | 620: | cover part |
| 621: | bolt | 630: | pressing part |
| 631: | projection | | |

### [Mode for Invention]

Hereafter, the preferred embodiments of the present invention will be described in detail with reference to the attached drawings.

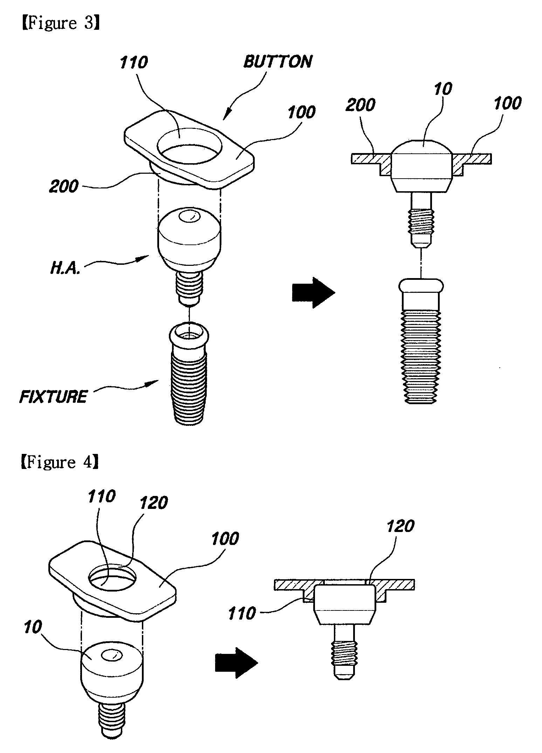

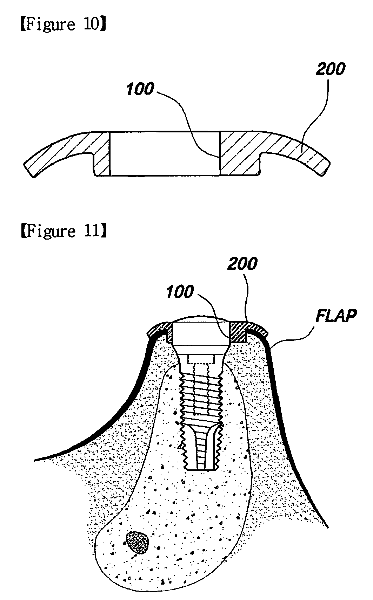

FIGs. 3 through 10 are views illustrating the embodiments of a button for an implant healing abutment according to the present invention, and FIG. 11 is a view illustrating the state in which the button for an implant healing abutment according to the present invention is installed.

A button BUTTON for an implant healing abutment according to the present invention is coupled to an implant healing abutment H.A. which is temporarily joined to an implant fixture FIXTURE in preparation for the installation of an artificial tooth until the implant fixture is stably anchored to an alveolar bone during dental implant surgery. The button for an implant healing abutment is composed of a button body 100 which is coupled to the implant healing abutment H.A. and a pressing part 200 which projects sideward from the button body 100. Preferably, the button for an implant healing abutment is made of silicon which is harmless to the human body and is hard to some extent. Besides, the button for an implant healing abutment may be made of other materials such as synthetic resin and titanium, provided they have high adaptability for the human body.

The button body 100 allows the button BUTTON for an implant healing abutment according to the present invention to be firmly coupled to the implant healing abutment in a manner such that the pressing part 200 can stably cover and fix a gingival flap. As a typical way of coupling the button body 100 to the implant healing abutment, interference fitting may be adopted.

That is to say, referring to FIG. 3, a fitting hole 110, which conforms to the shape of a head 10 of the implant healing abutment and has a size corresponding to or slightly less than the size of the head 10, is defined in the button body 100, such that the head 10 of the implant healing abutment can be interference-fitted into the fitting hole 110 to be maintained in a securely fastened state.

The interference fit means that the head 10 of the implant healing abutment is fitted into the fitting hole 110 of the button body 100 by applying force of a predetermined magnitude such that the head 10 is not released from the fitted position or that the fitted state of the head 10 is maintained unless external force is intentionally applied, and that the button can be released from the head 10 of the implant healing abutment by applying force greater than the force for the interference fit between the head 10 and the fitting hole 110 when it is necessary to release the button so as to perform a later surgery.

As another example of the interference fit, the embodiment shown in FIG. 4 can be realized. That is to say, a fitting hole 110 is defined in a button body 100, and an inward flange 120 is formed at the upper end of the fitting hole 110. Due to this fact, when the head 10 of the implant healing abutment is interference-fitted into the fitting hole 110, the upward movement of the head 10 is stopped by the inward flange 120 so that the depth by which the head 10 is interference-fitted into the hole 10 can be precisely determined.

At this time, while the head 10 of the implant healing abutment and the fitting hole 110 of the button body 100 are illustrated in the drawing as having a circular sectional shape, the present invention is not limited to a particular sectional shape. Therefore, it is to be noted that the head 10 of the implant healing abutment may have various sectional shapes such as of a polygon and an ellipse and the fitting hole 110 may have a sectional shape corresponding to that of the head 10.

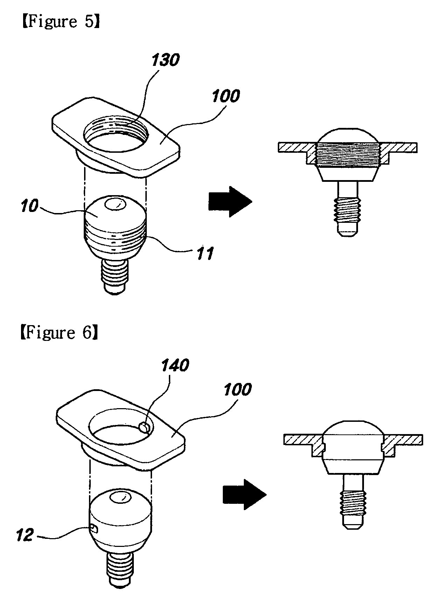

Referring to FIG. 5, the button for an implant healing abutment according to the present invention can be coupled to an implant healing abutment through threading.

That is to say, an external thread 11 is formed on a head 10 of an implant healing abutment, and an internal thread 130 is formed on the surface of a fitting hole 110 of a button body 100. Due to this fact, by positioning and rotating the button according to the present invention on the implant healing abutment, as the head 10 is threaded into the fitting hole 110, the button can be firmly coupled to the head 10 of the implant healing abutment.

In this case, advantages are provided in that the height of the button on the head 10 of the implant healing abutment can be precisely adjusted.

A button and an implant healing abutment can be firmly coupled to each other by a grooved structure.

That is to say, referring to FIG. 6, prominences 140 are formed on the surface of the fitting hole of a button body 100, and depressions 12, in which the prominences 140 are to be engaged, are defined on a head 10 of an implant healing abutment. Thus, by fitting the button around the implant healing abutment, the prominences 140 and the depressions 12 are engaged with each other to firmly couple the button body 100 and the head 10 to each other.

Of course, while not shown in the drawings, it is conceivable that depressions are defined on the surface of the fitting hole of the button and prominences are formed on the head 10 of the implant healing abutment.

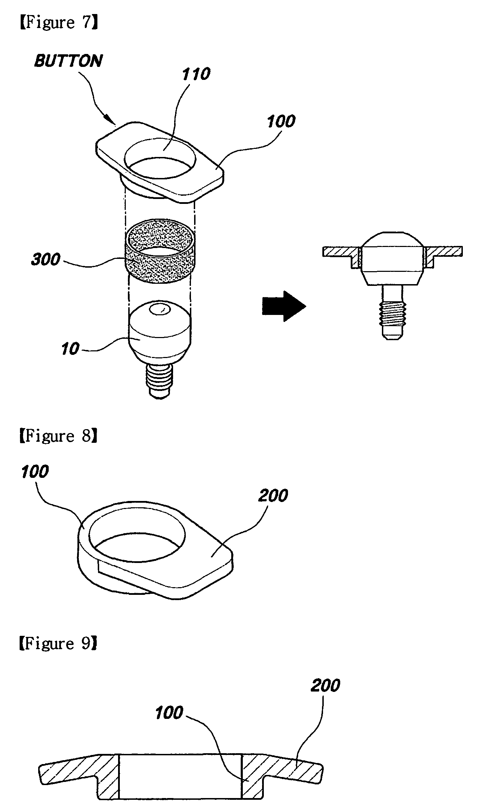

When coupling a button and an implant healing abutment to each other, as the occasion demands, a packing member may be additionally provided for firm coupling therebetween. For example, referring to FIG. 7, a separate packing member 300 is integrally inserted into a fitting hole 110 of a button body 100, so that, when a head 10 of an implant healing abutment is interference-fitted into the fitting hole 110, relatively soft coupling and maintenance of the coupled state can be ensured.

Also, while not shown in the drawings, at least one longitudinally extending prominence, at least one transversely extending prominence, embossments, or X-shaped prominences may be formed at regular intervals on the surface of a fitting hole so that reliable coupling between a button and a head of an implant healing abutment can be accomplished.

The pressing part 200 covers, fixes and heals an incised gingival flap.

That is to say, when joining an implant healing abutment to an implant fixture, the gingival flap is produced by conducting horizontal incision at a lingual side and downward vertical incision beyond a mucogingival junction. In order to fix and heal the gingival flap, only suture was used in the conventional art. However, in the present invention, the pressing part 200 presses the gingival flap to securely fix the gingival flap solely or along with the use of a suture. At this time, the pressing part 200 prevents the gingival flap from moving onto the implant healing abutment, so that the available amount of attached gingiva is not reduced.

The pressing part 200 is formed in such a way as to project sideward from the button body 100. As the occasion demands, the pressing part 200 can be formed into a one wing type as shown in FIG. 8, a two wing type as shown in FIGs. 3 through 7, or an annular wing type.

That is to say, depending upon a position for incising the gingiva and conducting dental implant surgery, there may be various situations in which the gingiva should be pressed at one or both of a buccal side and the lingual side or in the annular direction when viewed from the implant healing abutment.

Therefore, it is preferred that the pressing part 200 be formed into various types such as the one wing type in which the pressing part 200 projects from the button body 100 in one direction, the two wing type in which the pressing part 200 projects from the button body 100 in two directions, the annular wing type in which the pressing part 200 projects from the button body 100 in the annular direction, and so forth, so that the type of the pressing part 200 can be selected as desired. Also, it is more preferred that the projecting length of the pressing part 200 be changed into a long type, a short type, etc., so that selection can be made depending upon the condition of a patient.

When the pressing part 200 is projected sideward from the button body 100, it may be inclined downward as shown in FIG. 9 or may have a curved surface as shown in FIG. 10 to conform to the contour of the gingiva so that it is possible to effectively press the gingiva.

While it was illustrated that the pressing part 200 projects from the upper end of the button body 100, the present invention is not necessarily limited to the illustrated examples. Instead, it is conceivable that a pressing part projects from the lower end of a button body, or a pressing part and a button body have the same thickness. When the thickness of the gingiva is small, it may be preferable that a pressing part project from the lower end of a button body since it is then possible to forcefully press the gingiva.

In general, the pressing part 200 projects from the upper end of the button body 100. The reason for this is as described below with reference to FIG. 11. In the case that the pressing part 200 projects from the upper end of the button body 100, when the incised gingival flap is pressed and healed by the pressing part 200, a portion of the button body 100, which is positioned below the pressing part 200, functions to further push downward the gingival flap including the attached gingiva. Therefore, when the button is removed subsequently, the gingival flap can be healed at a relatively lower position, and the attached gingiva can be filled inside the gingival flap which is pushed downward by the portion of the button body 100, whereby it is possible to secure an increased amount of the attached gingiva.

Accordingly, in the button for an implant healing abutment according to the present invention, the thickness of the portion of the button body 100 which is positioned below the pressing part 200 serves as an important factor in securing an additional amount of attached gingiva. Therefore, it is especially preferred that the portion of the button body 100 which is brought into contact with the gingival flap FLAP be formed to have an increased thickness.

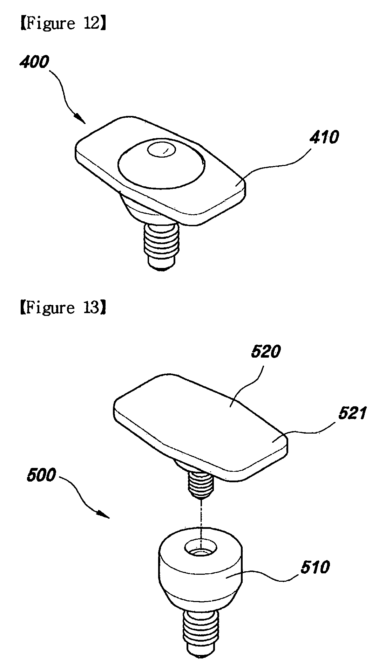

The pressing part constituting the essential feature of the present invention may not be necessarily provided to the separate button which is coupled to the existing implant healing abutment. Hence, it can be envisaged that a pressing part may be integrally formed on an implant healing abutment. In this regard, embodiments of an implant healing abutment having a pressing part will be described with reference to FIGs. 12 through 14.

An implant healing abutment having a pressing part, which constitutes the present invention, includes an implant healing abutment, which is anchored to an implant fixture, and a pressing part, which projects sideward from the upper end of the implant healing abutment to be placed on the gingiva.

The implant healing abutment and the pressing part can be formed integrally with each other as shown in FIG. 12 in a manner such that a pressing part 410 integrally projects sideward from the upper end of an implant healing abutment 400.

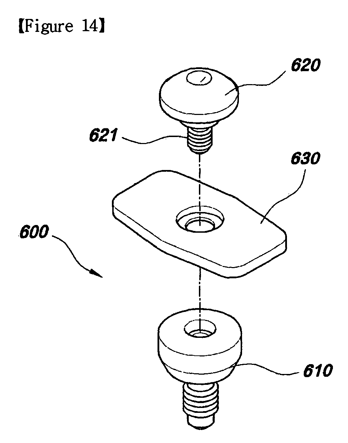

Alternatively, an implant healing abutment can be constructed to be disassembled into a plurality of pieces as shown in FIGs. 13 and 14.

First, referring to FIG. 13, an implant healing abutment 500 is composed of an abutment body 510, which is bolted to an implant fixture, and an abutment cover 520, which is bolted to the abutment body 510, covers the abutment body 510 and has a pressing part 521 integrally projecting sideward therefrom. After the abutment body 510 is joined to the implant fixture, by coupling the abutment cover 520 to the abutment body 510, the pressing part 521 can smoothly press the gingiva.

In the case of the present embodiment, when the gingiva is pressed by the pressing part 521 and is completely healed, it is necessary to couple a separate abutment cover (not shown) having no pressing part in place of the abutment body having the pressing part integrally projecting therefrom until the implant fixture is completely anchored to the alveolar bone.

Next, referring to FIG. 14, an implant healing abutment 600 is composed of an implant fixture coupling part 610, which is bolted to an implant fixture, and a cover part 620, which is bolted to the implant fixture coupling part 610. A pressing part 630 is provided as a separate piece, and a bolt 621 of the cover part 620 passes through the center portion of the pressing part 630. The pressing part 630 is interposed and coupled between the implant fixture coupling part 610 and the cover part 620 so as to press the gingiva.

In the case of the present embodiment, when the gingiva is completely healed, the cover part 620 is simply unlocked, the pressing part 630 is removed, and then the cover part 620 is locked again to the implant fixture coupling part 610 until the implant fixture is completely anchored to the alveolar bone.

It can be contemplated that a projection 631 having the shape of a polygon is formed on the pressing part 630, and a groove 611 to be engaged with the projection 631 is defined in the implant fixture coupling part 610 which is brought into contact with the pressing part 630. Therefore, by locking the cover part 620 to the implant fixture coupling part 610, the projection 631 is engaged into the groove 611 so that the rotation of the pressing part 630 can be prevented.

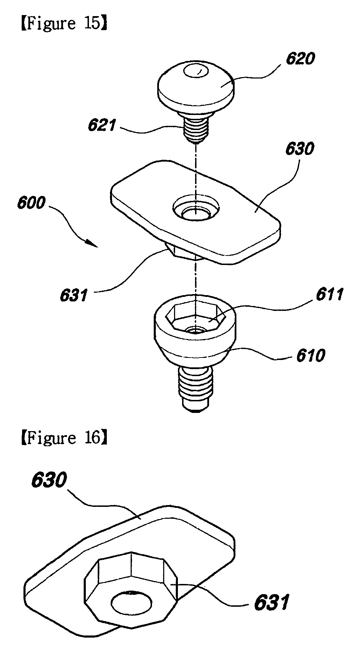

While the projection 631 and the corresponding groove 611 are illustrated in FIG. 16 as having an octagonal sectional shape, the present invention is not limited to a particular sectional shape of the projection 631 and the groove 611. It is to be understood that the projection 631 and the groove 611 may have various other sectional shapes such as a triangular shape, and so on.

Further, it can be contemplated in the present embodiment that the groove may be defined in the pressing part 630 and the projection may be formed on the implant fixture coupling part 610.

Meanwhile, although not shown in the drawings, a pressing part may be provided for an implant healing abutment through various coupling structures among a plurality of pieces. Even in this case, the object of the present invention can be achieved due to the fact that the pressing part presses and heals the gingiva and thereby, it is possible to prevent the available amount of the attached gingiva from being decreased.

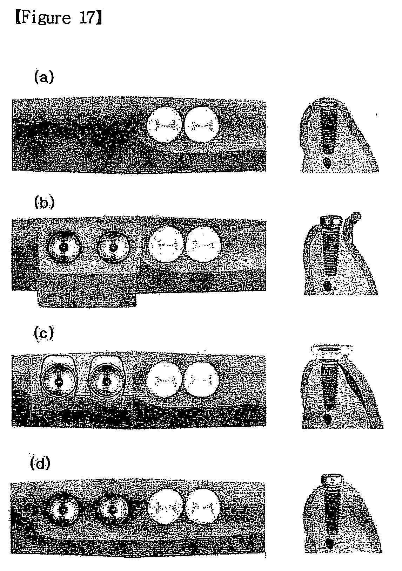

Hereinbelow, a procedure for healing the gingiva with an implant healing abutment exposed out of the upper end of the gingiva by using the button for an implant healing abutment and/or the implant healing abutment having a pressing part according to the present invention when conducting dental implant surgery will be described with reference to FIG. 17.

First, in the state in which a tooth is missing and attached gingiva exists only at the lingual side (a), horizontal incision is made at the lingual side, and downward vertical incision is then made beyond a mucogingival junction with the implant healing abutment joined to an implant fixture (b) to produce a gingival flap. Next, in the state in which the gingival flap is pushed downward by the implant healing abutment (or a button body), the pressing part presses, fixes and heals the gingival flap (c). When the gingiva is healed, the pressing part is removed, and the newly attached gingiva is filled upward from the position of the gingival flap toward the upper end of the implant healing abutment to surround the implant healing abutment (d), whereby it is possible to secure an increased amount of attached gingiva.

As a consequence, in the present invention, it is possible to solve the problems caused in the conventional art due to the fact that the attached gingiva moves onto the implant healing abutment when the gingival flap is fixed only through suture and that then the available amount of attached gingiva is reduced.

## Claims

1. A button for an implant healing abutment, comprising:
a button body (100) adapted to be coupled to an implant healing abutment (H.A.); and
a pressing part (200, 400) projecting sideward from the button body (100), wherein the pressing part (200, 400) is adapted to cover, fix and heal an incised gingival flap including attached gingiva.

2. The button according to Claim 1, wherein the button body (100) is adapted to be coupled to the implant healing abutment (H.A.) through any one of an interference fit, threading (130), and engagement between prominences (140) and depressions (12).

3. The button according to Claim 2, further comprising: a packing member (300) is adapted to be interposed between the button body (100) and the implant healing abutment (H.A.)to ensure reliable coupling therebetween.

4. The button according to claim 1, wherein a portion of the button body (100), which is adapted to be brought into contact with the gingival flap, is formed to have an increased thickness.

5. The button according to claim 1, wherein the pressing part (200, 400) projects sideward from the button body (100) into a one wing type, a two wing type, or an annular wing type.

6. The button according to Claim 1, wherein the pressing part (200, 400) is formed to be inclined downward to conform to a contour of gingiva.

7. An implant healing abutment (H.A.) having a pressing part (200, 400), comprising:
an implant healing abutment (H.A.) adapted to be joined to an implant fixture; and
a pressing part (200, 400) projecting sideward from the implant healing abutment (H.A.), wherein the pressing part (200, 400) is adapted to cover, fix and heal an incised gingival flap including attached gingiva.

8. The implant healing abutment according to claim 7, wherein a portion of the implant healing abutment (H.A.), which is adapted to be positioned over gingiva, is structured to be disassembled into a plurality of pieces, such that the pressing part (200, 400) projects from one piece.

9. The implant healing abutment according to claim 8, wherein the implant healing abutment (H.A.) comprises an abutment body (510) which is adapted to be jointed to the implant fixture and an abutment cover (520) which covers and is coupled to the abutment body (510)and from which a pressing part (200, 400) integrally projects sideward.

10. The implant healing abutment according to claim 8, wherein the implant healing abutment (H.A.) comprises an implant fixture coupling part (610) which is adapted to be bolted to the implant fixture, a cover part (620) which is bolted to the implant fixture coupling part (610), and a pressing part (630) which is interposed and coupled between the implant fixture coupling part (610) and the cover part (620) while allowing a bolt (621) of the cover part (620) to pass through a center portion thereof.

11. The implant healing abutment according to claim 10, wherein a projection and a groove (611), which have a polygonal section shape, are respectively formed and defined on the pressing part (610) and in the implant fixture coupling part (610) which is brought into contact with the pressing part (630), such that the projection and the groove (611) are engaged with each other to prevent rotation of the pressing part (630).

12. The implant healing abutment according to claim 7, wherein the pressing part (200, 400) projects sideward from the button body (100) into a one wing type, a two wing type, or an annular wing type.

13. The implant healing abutment according to claim 7, wherein the pressing part (200, 400) is formed to be inclined downward to conform to a contour of gingiva.

## Patentansprüche

1. Kappe für ein Einheil-Abutment, umfassend:
Kappenkörper (100), der dafür angepasst ist, an einem Einheil-Abutment (H. A.) befestigt zu werden; und
Pressteil (200,400), das seitwärts vom Kappenkörper herausragt (100), wobei das Pressteil (200,400) dafür angepasst ist, eine eingeschnittene Zahnfleischlasche, einschließlich des angehefteten Zahnfleisches, zu bedecken, zu fixieren und zu heilen.

2. Kappe gemäß Anspruch 1, wobei der Kappenkörper (100) dafür angepasst ist, an dem Einheil-Abutment durch irgendeines von einer Presspassung, einem Gewindeschneiden, und einem Eingreifen zwischen Vorsprüngen (140) und Vertiefungen (12) befestigt zu werden.

3. Kappe gemäß Anspruch 2 weiterhin umfassend: Verbindungsglied (300), das dafür angepasst ist, zwischen den Kappenkörper (100) und das Einheil-Abutment (H. A.) eingefügt zu werden, um zuverlässige Befestigung dazwischen sicherzustellen.

4. Kappe gemäß Anspruch 1, wobei ein Teil des Kappenkörpers (100), der dafür angepasst ist, mit der Zahnfleischlasche in Kontakt gebracht zu werden, so geformt ist, dass er eine zunehmende Stärke hat.

5. Kappe gemäß Anspruch 1, wobei der Pressteil (200,400) seitwärts vom Kappenkörper (100) in einem einflügeligen Typ, einem zweiflügeligen Typ oder einem ringflügeligem Typ herausragt.

6. Kappe gemäß Anspruch 1, wobei der Pressteil (200,400) so geformt ist, dass er nach unten geneigt ist, um sich an eine Kontur des Zahnfleisches anzupassen.

7. Einheil-Abutment (H. A.) mit einen Pressteil (200,400), umfassend:
Einheil-Abutment (H. A.), das dafür angepasst ist, an eine Implantathalterung angefügt zu werden; und
Pressteil (200,400), das seitwärts des Einheil-Abutments (H. A.) herausragt, wobei das Pressteil (200,400) dafür angepasst ist, eine eingeschnittene Zahnfleischlasche, einschließlich des angehefteten Zahnfleisches, zu bedecken, zu fixieren und zu heilen.

8. Einheil-Abutment gemäß Anspruch 7, wobei ein Teil des Einheil-Abutments (H. A.), das angepasst ist, über dem Zahnfleisch positioniert zu werden, so gegliedert ist, dass es in eine Vielzahl von Teilen zerlegt werden kann, so dass das Pressteil (200,400) von einem Teil herausragt.

9. Einheil-Abutment gemäß Anspruch 8, wobei das Einheil-Abutment (H. A.) einen Abutment-Körper (510) umfasst, der dafür angepasst ist, an die Implantathalterung angefügt zu werden, und eine Abutment-Bedeckung (520), die den Abutment-Körper (510) bedeckt und daran befestigt ist, und von der ein Pressteil (200,400) fest eingebaut seitwärts herausragt.

10. Einheil-Abutment gemäß Anspruch 8, wobei das Einheil-Abutment (H. A.) ein Implantathalterungs-Befestigungsteil (610) umfasst, das dafür angepasst ist, an die Implantathalterung festgeschraubt zu werden, ein Bedeckungsteil (620), das an das Implantathalterung-Befestigungsteil (610) festgeschraubt ist, und ein Pressteil (630), das zwischen das Implantathalterungs-Befestigungsteil (610) und das Bedeckungsteil (620) eingefügt und dazwischen befestigt ist, wobei es einem Stift (621) des Bedeckungsteils (620) möglich ist, durch den Mittelteil davon hindurchzugehen.

11. Einheil-Abutment gemäß Anspruch 10, wobei ein Vorsprung und eine Vertiefung (611), die die Form eines Polygonschnitts haben, einzeln geformt und begrenzt werden auf dem Pressteil (610) und in dem Implantathalterungs-Befestigungsteil (610), das in Kontakt gebracht wird mit dem Pressteil (630), so dass der Vorsprung und die Vertiefung (611) ineinander eingreifen, um Rotation des Pressteils (630) zu verhindern.

12. Einheil-Abutment gemäß Anspruch 7, wobei das Pressteil (200,400) seitwärts des Kappenkörpers (100) in einem einflügeligen Typ, einem zweiflügeligen Typ oder einem ringflügeligem Typ herausragt.

13. Einheil-Abutment gemäß Anspruch 7, wobei das Pressteil (200,400) so geformt ist, dass es nach unten geneigt ist, um sich an eine Kontur des Zahnfleisches anzupassen.

## Revendications

1. Un bouton pour un aboutement de cicatrisation d'implant, comprenant:
un corps de bouton (100) adapté pour être couplé à aboutement de cicatrisation d'implant (H.A.); et
une partie de pression (200, 400) faisant saillie latéralement du corps de bouton (100), dans lequel la partie de pression (200, 400) est adaptée pour couvrir, fixer et guérir un lambeau gencivel incisé y-compris la gencive attachée.

2. Le bouton selon la revendication 1, dans lequel le corps de bouton (100) est adapté pour être couplé à l'aboutement de cicatrisation d'implant (H.A.) par moyen de l'un quelconque parmi un ajustement avec serrage, un filetage (130), et un engagement entre des saillies (140) et des dépressions (12).

3. Le bouton selon la revendication 2, comprenant en outre: un élement de garniture (300) adapté pour être interposé entre le corps de bouton (100) et l' aboutement de cicatrisation d'implant (H.A.) afin d'assurer un couplage fiable entre ces-ci.

4. Le bouton selon la revendication 1, dans lequel une partie du corps de bouton (100), qui est adaptée pour être mise en contact avec le lambeau gencivel, est formée pour avoir une épaisseur accrue.

5. Le bouton selon la revendication 1, dans lequel la partie de pression (200, 400) fait saillie latéralement du corps de bouton (100) dans un type à une aile, un type à deux ailes, ou un type annulaire.

6. Le bouton selon la revendication 1, dans lequel la partie de pression (200, 400) est formée pour être inclinée vers le bas afin de se conformer à un contour de la gencive.

7. Un aboutement de cicatrisation d'implant (H.A.) ayant une partie de pression (200, 400), comprenant:
an aboutement de cicatrisation d'implant (H.A.) adapté pour être relié à une fixation d'implant; et
une partie de pression (200, 400) faisant saillie latéralement de l'aboutement de cicatrisation d'implant (H.A.), dans lequel la partie de pression (200, 400) est adaptée pour couvrir, fixer et guérir un lambeau gencivel incisé y-compris la gencive attachée.

8. L'aboutement de cicatrisation d'implant selon la revendication 7, dans lequel une portion de l'aboutement de cicatrisation d'implant (H.A.), qui est adaptée pour être positionnée sur la gencive, est structurée pour être désassemblée dans une pluralité de pièces, de telle manière que la partie de pression (200, 400) s'étend d'une pièce.

9. L'aboutement de cicatrisation d'implant selon la revendication 8, dans lequel l' aboutement de cicatrisation d'implant (H.A.) comprend un corps d'aboutement (510) qui est adapté pour être articulé à la fixation d'implant et une couverture d'aboutement (520) qui couvre et est couplée au corps d'aboutement (510) et à partir de laquelle une partie de pression (200, 400) fait saillie latéralement intégralement.

10. L aboutement de cicatrisation d'implant selon la revendication 8, dans lequel l'aboutement de cicatrisation d'implant (H.A.) comprend une partie de couplage de fixation d'implant (610) qui est adaptée pour être boulonnée à la fixation d'implant, une partie de couverture (620) qui est boulonnée à la partie de couplage de fixation d'implant (610), et une partie de pression (630) qui est interposée et couplée entre la partie de couplage de fixation d'implant (610) et la partie de couverture (620) tout en permettant à un boulon (621) de la partie de couverture (620) de passer à travers d'une portion de centre de celle-ci.

11. L' aboutement de cicatrisation d'implant selon la revendication 10, dans lequel une saillie et une rainure (611), qui ont une forme en section polygonale, sont respectivement formées et définies sur la partie de pression (610) et dans la partie de couplage de fixation d'implant (610) qui est mise en contact avec la partie de pression (630), de telle manière que la saillie et la rainure (611) sont engagées l'une avec l'autre pour empêcher la rotation de la partie de pression (630).

12. L'aboutement de cicatrisation d'implant selon la revendication 7, dans lequel la partie de pression (200, 400) fait saillie latéralement du corps de bouton (100) dans un type à une aile, un type à deux ailes, ou un type annulaire

13. L'aboutement de cicatrisation d'implant selon la revendication 7, dans lequel la partie de pression (200, 400) est formée pour être inclinée vers le bas afin de se conformer à un contour de la gencive.
